# EUROPEAN PATENT APPLICATION

(11) **EP 4 611 275 A1**
(43) Date of publication of application: **03.09.2025**
(21) Application number: 24160517.9
(22) Date of filing: 29.02.2024
(51) Int. Cl.: H04B 7/185, H04W 84/00

(54) **WIRELESS NETWORK INFRASTRUCTURE, AIRCRAFT AND METHOD FOR WIRELESS COMMUNICATION ONBOARD AN AIRCRAFT**

(71) Applicant: Airbus Operations GmbH, 21129 Hamburg (DE); Airbus (S.A.S.), 31700 Blagnac (FR)
(72) Inventor: MUELLER, Jan, 21129 Hamburg (DE); MEYERHOFF, Thomas, 82024 Taufkirchen (DE); KRUEGER, Leo, 21129 Hamburg (DE); YIN, Chunjiang, 21129 Hamburg (DE); SCHWARK, Uwe, 21129 Hamburg (DE)
(74) Representative: Isarpatent

(57) **Abstract**

The present invention provides a wireless network infrastructure (1) for an aircraft (10), comprising a first communication unit (6) configured to receive and transmit data signals from and to a control system (3) located in a secured domain (100) of the aircraft (10), the first communication unit (6) further being configured as a first network node of a wireless communication network (5), a plurality of second communication units (7, 7a-7c) of corresponding aircraft devices (4, 4a-4c) located in an unsecured domain (200) of the aircraft (10), the second communication units (7, 7a-7c) being configured as second network nodes of the wireless communication network (5), wherein the aircraft devices (4, 4a-4c) are configured to be operated by control signals sent from the control system (3) to the aircraft devices (4, 4a-4c) and transmit control signals to the control system (3)over the wireless communication network (5), wherein each aircraft device (4, 4a-4c) having a communication unit (7, 7a-7c) further comprises additional control means (8, 8a-8d) dissimilar from the control signals sent over the wireless communication network (5) for operating the aircraft device (4, 4a-4c) independently. Further, the present invention provides an aircraft (10) comprising the wireless network infrastructure (1) as well as a method for wireless communication onboard an aircraft (10).

## Description

### TECHNICAL FIELD OF THE INVENTION

The invention relates to a wireless network infrastructure, an aircraft as well as a method for wireless communication onboard an aircraft.

### TECHNICAL BACKGROUND

For safety-related avionic systems, such as systems for navigational and flight control of the aircraft as well as safety systems in the aircraft cabin, such as oxygen mask release or emergency lighting, it is desired to stay operable in case of major, hazardous or catastrophic failure events of an aircraft. Typically, such systems are operated by the pilot or cabin crew according to certain flight phases or situations of the aircraft in fight.

For enhanced safety of an aircraft to achieve certain design assurance levels (DAL), redundant means for their operation are required.

The objective of the present invention is thus to provide redundant operation for devices on an aircraft, in particular devices relating to the safety onboard the aircraft.

### SUMMARY OF THE INVENTION

According to the invention, this problem is solved in each case by the subject matters of the independent claims.

According to a first aspect of the invention, a wireless network infrastructure for an aircraft is provided. The wireless network infrastructure comprises a first communication unit configured to receive and transmit data signals from and to a control system located in a secured domain of the aircraft, the first communication unit further being configured as a first network node of a wireless communication network, a plurality of second communication units of corresponding aircraft devices located in an unsecured domain (200) of the aircraft (10), the second communication units being configured as second network nodes of the wireless communication network, wherein the aircraft devices are configured to be operated by control signals sent from the control system to the aircraft devices and transmit control signals to the control system over the wireless communication network, wherein each aircraft device having a second communication unit further comprises additional control means dissimilar from the control signals sent over the wireless communication network for operating the aircraft device independently.

According to a second aspect of the invention, an aircraft is provided. The aircraft comprises the wireless network infrastructure according to the invention, the control system located in the secured domain of the aircraft, the aircraft devices located in the unsecured domain of the aircraft, and the additional control means for operating the aircraft devices.

According to a third aspect of the invention, a method for wireless communication onboard an aircraft is provided. The method comprises the steps of establishing a wireless communication network by connecting a first communication unit of a control system located in a secured domain of the aircraft as a first node to a plurality of second communication units of respective aircraft devices as second nodes, the aircraft devices (4, 4a-4c) located in an unsecured domain (200) of the aircraft, sending a control signal generated by the control device from the control system to one or more of the aircraft devices through the wireless communication network to operate the aircraft devices, and/or sending a control signal generated by one of the aircraft devices to the control system through the communication network, wherein each of the aircraft devices further comprises additional control means dissimilar from the control signals sent over the wireless communication network for operating the aircraft devices independently.

A fundamental idea of the present invention is to provide further means or instruments for controlling and communicating with aircraft devices by a wireless network infrastructure in addition to already existing ones. This provides an additional control means for operating machines, system or device, thus aircraft devices onboard an aircraft. The redundant means use a different technique than existing means and thus provide an additional safety layer for operating these devices. Therefore, a fundamental concept of the invention is to provide wireless machine-to-machine communication to interconnect aircraft systems and devices in combination with an additional control and/or communication system for establishing a dissimilar redundant control of devices onboard a single aircraft.

Such wireless avionics intra-communication systems are composed of radio units, i.e. the communication units, as a form of nodes, which are integrated in all kinds of devices and systems, such as e.g. safety-related avionic systems onboard an aircraft. The radio units constitute a wireless machine-to-machine communication network enabling avionic systems to exchange data onboard a single aircraft wirelessly.

In particular safety related aircraft functions with subsystems distributed throughout the aircraft (e.g. flight controls or oxygen mask release systems) may be required to use dissimilar redundant communication links to interconnect subsystems (oxygen mask release switch to oxygen mask storage box, smoke detection, emergency lightning) or connect with other aircraft systems (e.g. cabin management system). By making use of the respective communication link, such dissimilar redundant communications improve the safety and regulatory of flight of the aircraft. By such dissimilar redundant communications, an overall system reliability can be achieved by ensuring a high-level reliability.

The use of wireless communication infrastructure as one component in a dissimilar redundant communication means introduces multiple benefits compared to a system with other communication means, such as wired communication means. A particular advantage of the present invention is given by weight savings due to reduced wiring. A further advantage is the improved decoupling between cabin systems and airframe infrastructures as fewer wiring harnesses need to be adapted in case of cabin customization, as well as increased robustness of the complete system under certain failure conditions (e.g., cable cuts due to an uncontained engine burst).

The control system can be a head controller over which the systems onboard the aircraft can be controlled or operated. A communication unit, or radio unit, of the control system or an aircraft device, can be a part of such device or can be attached to the device. It further may be configured as a module of the control system or one or some of the aircraft devices. A control system may also have, or be connected to, further first communication units that all are access points to the wireless communication network. Each of the aircraft devices has one communication unit, i.e. the second communication unit, over which the aircraft device can access the wireless communication network and communicate with the control system and receive and preferably also transmit the data signals, such as the control signal. By receiving the control signal, the aircraft device can be operated. Furthermore, the aircraft devices are configured to send control signals to the control system over the wireless communication network, i.e. by using the second communication units. In this way for example, a smoke detector as an aircraft device is capable to send an alert to the control system.

Each of the second communication units of the aircraft devices installed onboard the aircraft is thus connected to the one or more first communication units over the wireless communication network of the control system installed onboard the aircraft. The first and second communication units may thus be modem cards or the like. The wireless communication network may be configured to connect the communication link by a deterministic link to provide a stable connection. The first communication unit of the control system may be installed near the front door of the aircraft to be in the vicinity of the cockpit of the aircraft and the general control system of the aircraft. Furthermore, to take into account security aspects of the aircraft, the control system is located in a secured domain, such as an aircraft control domain, ACD, of the aircraft, whereas the first communication unit and the second communication units as well as their corresponding aircraft devices are located in an unsecured domain, such as a non-ACD of the aircraft. Between these two control domains, typically security gateways, including firewalls and message filtering functions, are typically implemented.

For operating the wireless communication network and its infrastructure, a user interface module may be provided, which is configured to provide a graphical representation or monitor of the multiple aircraft devices and the control system. A control logic module implemented within the control system may be configured to receive user inputs through the user interface module and generate the control signals. Such a control logic module may be installed in a board computer.

A dissimilar means is to be understood as a means using different techniques. A dissimilar means from a control over a wireless communication network thus can be any other kind of technique for control, such as manual means or a control over a wired network, as will be explained further below.

Advantageous embodiments and further developments emerge from the description with reference to the figures.

According to some aspects of the wireless network infrastructure according to the invention, the aircraft devices are partly or all safety-related devices of an aircraft cabin of the passenger aircraft. In this way, the safety onboard the aircraft in e.g. a passenger aircraft can be ensured with a higher probability in case of a major incident such as an uncontained engine rotor burst onboard the aircraft.

According to some further aspects of the wireless network infrastructure according to the invention, the aircraft device is a safety-related device of an avionics system of the passenger aircraft. This ensures that the aircraft function remains available even in case of a major incidence such as an unconstrained engine rotor burst on board the aircraft.

According to some further aspects of the wireless network infrastructure according to the invention, the wireless network infrastructure further comprises an autonomous energy supply powering the first and second communication units autonomously. The autonomous energy supply may be implemented by one or more batteries in each of the first and second communication units. In this way, the communication units still receive electric power so that the wireless communication network will still function in case the main energy supply onboard the aircraft has failed. This aspect thus further increases the safety of the aircraft.

According to some further aspects of the wireless network infrastructure according to the invention, the additional control means is configured as a wired communication network connecting at least a part of the plurality of aircraft devices to the control system. Having a wired communication network, communication still functions in case, the wireless communication network is compromised e.g. by unexpected interference, signal attenuation, or signal fading. In particular, all aircraft devices may be connected to the wired communication network.

According to some further aspects of the wireless network infrastructure according to the invention, the wireless communication network and the wired communication network connect safety-related aircraft devices independently from each other. In this case as well, the safety onboard an aircraft, such as e.g. a passenger aircraft, can be ensured with a higher probability in case of a major, hazardous or catastrophic event such as an uncontained engine rotor burst.

According to some further aspects of the wireless network infrastructure according to the invention, the additional control means of one or more aircraft devices is a manual means, in particular a switch, a lever or a graphical user interface, for operating the one or more aircraft devices manually by an operator. In this case, the aircraft device can still be operated in case all communication units or devices have failed This further increases the safety of the aircraft.

According to some further aspects of the wireless network infrastructure according to the invention, the wireless communication network is operating in a safety-designated frequency band. Such frequency band may be located between 4200 and 4400 MHz. In this way, the probability of interference with other wireless communication signal onboard the aircraft is strongly reduced, thus providing improved safety to the network infrastructure.

According to some further aspects of the wireless network infrastructure according to the invention, the network infrastructure further comprises a plurality of first communication units of one or more control systems. The plurality of first communication units is configured as first nodes of the wireless communication network. Each of the plurality of first communication units is connected to one or more second communication units over the wireless communication network. The connection of more the one second communication units means the introduction of some sort of multihop communications. If such multihop communications is implemented in a way, that a communication mesh is formed, redundancy is introduced. This is because in case of a failure of a second communication unit in such a mesh, data packets may traverse through the mesh on an alternative path.

According to some further aspects of the wireless network infrastructure according to the invention, the network infrastructure further comprises one or more third network communication units configured as intermediate nodes of the wireless communication network and connecting the first communication units and at least one of the second communication units over the wireless communication network. The third communication units can be stand-alone devices or be part of other devices or systems onboard the aircraft. These third communication units may be implemented as modem cards or the like and are able to receive data signals such as the control signal from the first communication unit and relay or reemit these to one or more second communication units. The relayed signals may be processed by the third communication unit so that the wireless communication network may be established over a larger area, which is suitable for larger aircrafts. For example in a multihop mesh, a signal on a receive side may be down-converted, demodulated, decoded and then encoded, modulated and up-converted again on a transmit side of the third communication unit.

According to some further aspects of the wireless network infrastructure according to the invention, the first, second and third nodes of the wireless communication network are configured as one of a meshed topology and a star topology. A meshed topology can provide increased redundancy in that a second communication units may be able to establish a plurality of new communication links to the first communication unit by another second or third communication unit, which is able to relay data signals such as control signals. In a star topology, a hub unit as a center communication unit may be provided. The hub unit may have a higher bandwidth in that it is able to handle more data traffic. In this way, a more compact wireless communication network can be established.

According to some further aspects of the wireless network infrastructure according to the invention, at least one of the plurality of second communication units is configured to communicate directly to a further second communication unit over the wireless communication network. In this way, data signals such as control signals can be relayed from a communication unit of a first aircraft device to a communication unit of a second aircraft device of the plurality of aircraft devices, enabling further topologies of the wireless communication network. It thus improves the robustness of the wireless communication network.

According to some aspects of the aircraft according to the invention, the additional control means is a wired communication network connecting at least a part of the plurality of aircraft devices to the control system. Having a wired communication network, communication still functions in case, the wireless communication network is compromised e.g. by unexpected interference, signal attenuation, or signal fading. In particular, all aircraft device may be connected by the wired communication network.

According to some further aspects of the aircraft according to the invention, the additional control means of at least one aircraft device is a manual means, in particular a switch , a lever or a graphical user interface, for operating the one or more aircraft devices manually by an operator. In this case, the aircraft device can still be operated in case the all communication units or devices have failed due to e.g. events with a potentially major, hazardous or catastrophic effect. This further increases the safety of the aircraft.

The above embodiments and further developments can be combined with each other as desired, if useful. In particular, all features of the wireless network infrastructure for an aircraft are transferable to the aircraft and/or the method for wireless communication in an aircraft, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

### BRIEF SUMMARY OF THE DRAWINGS

The present invention is explained more specifically below on the basis of the exemplary embodiments indicated in the schematic figures, in which:
- Fig. 1: a schematic illustration of a wireless network infrastructure for an aircraft according to an embodiment of the invention;
- Fig. 2: a schematic illustration of an aircraft comprising the wireless network infrastructure according to an embodiment of the invention;
- Fig. 3: a schematic illustration of an implementation of the wireless network infrastructure in a cabin system of an aircraft according to an embodiment of the invention; and
- Fig. 4: a flow chart for a method for wireless communication in an aircraft according to an embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

Furthermore, the expression of devices being "connected", in particular related to the communication units or control or aircraft devices connected to a wired or wireless communication network is to be understood in that a link between these devices may be established through the respective network. Such a link may be a "direct" link without involving further devices, or it may be an indirect link, in which a signal is relayed and potentially amplified by another device or communication unit. Therefore, the expression of a device or a communication unit being "directly connected" implies a direct link between the devices or communication units, thus without any relaying of signals.

In the figures of the drawing, elements, features and components that are the same, have the same function and have the same effect are each provided with the same reference signs - unless explained otherwise.

### DESCRIPTION OF EXEMPLARY EMBODIMENTS

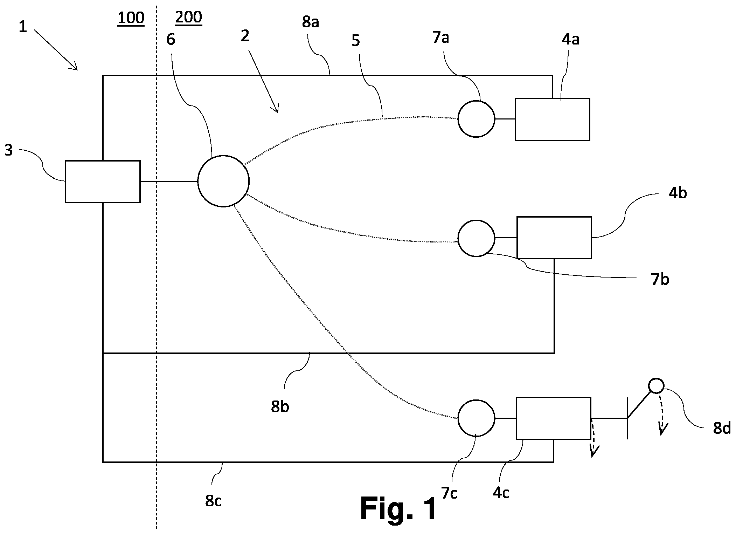

Fig. 1 shows a schematic illustration of a wireless network infrastructure 1 for an aircraft 10 according to an embodiment of the invention.

The wireless network infrastructure 1 shown in Fig. 1 comprises a first communication unit 6 configured to receive and transmit data signals from and to a control system 3 configured as a first network node of a wireless communication network 5. The wireless network infrastructure 1 further comprises a plurality, in the present embodiment three, of second communication units 7a-7c of corresponding aircraft devices 4, 4a-4c.

The control system 3 is located in a secured domain 100 of the aircraft 10 and may be a head controller installed on an aircraft 10 over which aircraft systems and end devices may be controlled. The control system 3 typically is located in a front part of the aircraft 10 near the cockpit. In preferred embodiments, there are a plurality of control systems 3, which are located and being operable from the cockpit, and which are configured to communicate with the aircraft devices 4a-4c. The aircraft devices 4a-4c are located in an unsecured domain 200 of the aircraft 10. The first and second communication units 6, 7a-7c and their established wireless communication network 5 are located in an unsecured domain 200 of the aircraft 10. The first and second communication units 6, 7a-7c may be configured as radio units to emit or transmit and receive data signals from or to other communication units over the wireless communication network to communicate with other communication units. This means that the data signal may be transmitted or received by electromagnetic waves of a predetermined bandwidth. Common wireless networks such as WLAN or Bluetooth may be employed for this task. In certain embodiments, the wireless communication network 5 is operating in a safety-designated frequency band. In some of these embodiments, the frequency band is between 4200 and 4400 MHz in order to ensure non-interference with other wireless signals onboard the aircraft 10.

The aircraft device 4a-4c may be any device or system onboard the aircraft 10. For example, the aircraft device 4a-4c may be an oxygen mask releasing system for emergency, or related to lightning, in particular emergency lightning. The aircraft device 4a-4c may, however, also relate to avionic systems such as the flight control, which is critical to control the aircraft.

The second communication units 7a-7c are configured as second network nodes of the wireless communication network 5. Each of the second communication units 7a-7c is connected to the first communication unit 6 over the wireless communication network 5. The wireless communication network 5 and its connections or links are indicated by the dotted lines in Fig. 1. In the embodiment of the network infrastructure 1 shown in Fig. 1, by having a single first node, the first, and second nodes of the wireless communication network 5 form a star topology, since all of the second nodes or second communication units 7a-7c are directly connected to the first node, or the first communication unit 6.

Each of the second communication units 7a-7c of the aircraft devices installed onboard the aircraft 10 is thus connected to the first communication unit 6 over the wireless communication network 5 of the control system 3 installed onboard the aircraft. The second communication units 7a-7c as well may thus be modem cards or the like. The wireless communication network 5 is configured to connect the communication link by a deterministic link to provide a stable connection. The first communication unit 6 of the control system 3 may be installed near the front door of the aircraft 10 to be in the vicinity to the cockpit and the general control system of the aircraft 10 as will be further shown below.

The aircraft devices 4a-4c are configured to be operated by control signals sent from the control system 3 to the aircraft devices 4a-4c over the wireless communication network 5. Furthermore, the aircraft devices 4a-4c are configured to send control signals to the control system 3 over the wireless communication network 5, i.e. by using the second communication units 7a-7c. In this way, a smoke detector as an aircraft device 4a-4c is capable to send an alert to the control system 3. Control signals are thus data signals that can be sent from the control system 3 to the aircraft devices 4a-4c through the wireless communication network 5 by relay of the first and second communication units 6, 7a-7c. In some embodiments, for operating the wireless communication network 5 and its infrastructure, a user interface module is provided, which is configured to provide a graphical representation or monitor of the multiple aircraft devices 4a-4c and the control system 3. A control logic module implemented within the control system 3 is configured to receive user inputs through the user interface module and generate the control signals. In further embodiments, such a control logic module is installed in a board computer of the aircraft 10.

Each of the aircraft devices 4a-4c having a communication unit 7a-7c further comprises additional control means 8a-8d dissimilar from the control signals sent over the wireless communication network 5 for operating the aircraft device 4a-4c independently. In some embodiments, the additional control means 8, 8a-8d is configured as a wired communication network 8. 8a-8c connecting at least a part of the plurality of aircraft devices 4a-4c to the control system 3, as it is shown in Fig. 1. Such wired communication network 8a-8c may be based on connections established by Ethernet, CAN, ARINC 429 or the like. In some embodiments, the wireless communication network 5 and the wired communication network 8, 8a-8 connect safety-related aircraft devices 4a-4c independently from each other. Alternatively, or in addition as for aircraft device 4c, the additional control means 8a-8d of one or more aircraft devices 4c is a manual means 8d, in particular a switch or a lever, for operating the one or more aircraft devices 4a-4c manually by an operator. In some embodiments, the manual means is a graphical user interface over which an operator can directly control the aircraft device 4 by locally accessing a controller of the respective aircraft device 4.

In some embodiments, the wireless network infrastructure comprises an autonomous energy supply (not shown in Fig. 1) for powering the first and second communication units 6, 7a-c autonomously. In some of these embodiments, the autonomous energy supply is implemented by one or more batteries in each of the first and second communication units 7, 7a-c. Alternatively, the first and second communication units 6, 7a-7c are powered by a power supply of the aircraft 10.

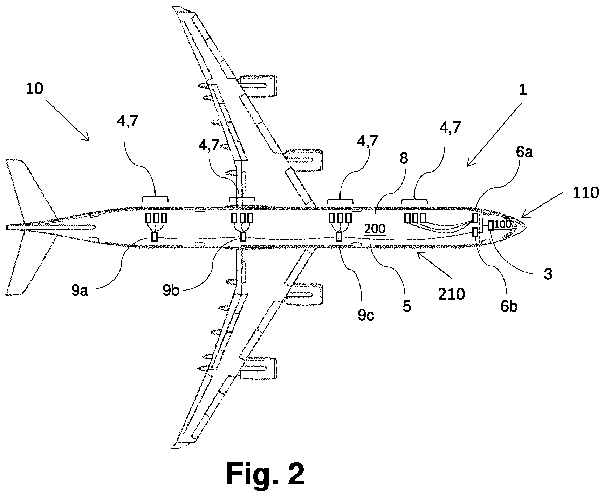

Fig. 2 shows a schematic illustration of an aircraft 10 comprising the wireless network infrastructure 1 according to an embodiment of the invention.

The plan view in Fig. 1 shows a passenger aircraft 10, which comprises the wireless network infrastructure 1 as described above. It thus also comprises the related control system 3, a plurality of aircraft devices 4 with second communication units 7, and the additional control means 8 for operating the aircraft devices 4.

In the shown aircraft 10, the wireless network infrastructure 1 further comprises a plurality of first communication units 6a, 6b. In the shown embodiment, the first communication units 6a, 6b are connected to one control system 3. In further embodiments, there can be more than one control systems 3 for redundancy. The control system 3 is located in a secured domain 100 near the cockpit 110 of the aircraft 10. The plurality of first communication units 6a, 6b are configured as first nodes of the wireless communication network 5. Each of the plurality of first communication units 6a, 6b is connected to one or more second communication units 7 over the wireless communication network 5. In Fig. 2 as well, the wireless communication network 5 and its connections or links are indicated by the dotted lines. The first communication units 6a, 6b as well as the second communications units 7 are located in an unsecured domain 200 of the aircraft, in the present embodiment in the cabin 210 of the aircraft 10.

Furthermore, in this embodiment, the wireless network infrastructure further comprises one or more third communication units 9a-9c configured as intermediate nodes of the wireless communication network 5. In the shown embodiment, three third communication units 9a-9c are implemented in the wireless network infrastructure 1. Each of these third communication units 9a-9c is connected to one first communication unit 6b and at least one of the second communication units 7 over the wireless communication network 5. In the shown embodiment in Fig. 1, third node 9a is directly connected to one of the first communication units 6b so that is configured to communicate and receive the control signal directly from the first communication unit 6b. Depending on which aircraft device/s 4 the control signal is addressed, it may send the control signal to one of the corresponding second communication units 7 directly connected to the third communication unit 9c, and/or it may relay the control signal to the next third communication unit 9b. Again, the next third communication unit 9b checks which aircraft device/s 4 is addressed, and then may send the control signal to the corresponding second communication unit 7 of the corresponding aircraft device 4 directly connected to the third communication unit 9b, and/or it may relay the control signal to the third communication unit 9c located near the back of the aircraft 10 to relay the control signal to the corresponding communication device 7 of the aircraft device 4.

In the present embodiment, the additional control means 8, 8a-8c is a wired communication network 8 connecting all of the plurality of aircraft devices 4 to the control system 3. In further embodiments, the wired communication network 8 connects only part of the plurality of aircraft devices 4 to the control system 3. In further embodiments, the additional control means 8 of at least one aircraft device 4 is a manual means not shown in Fig. 2 for operating the one or more aircraft devices 4 manually by an operator. In some of these embodiments, the manual means is a switch or a lever. In some embodiments, aircraft devices 4, which are not connected to the wired communication network 5 have manual means for operating the corresponding aircraft device 4.

In some embodiments, the aircraft devices 4 are partly safety-related devices of an aircraft cabin of the aircraft 10. In further embodiments, all of the aircraft devices 4 are safety-related devices of the aircraft cabin of the aircraft 10. In some embodiments, the aircraft devices 4 are partly safety-related devices of an avionics system of the aircraft 10. In further embodiments, all of the aircraft devices 4a-4c are safety-related devices of the avionics system of the aircraft 10.

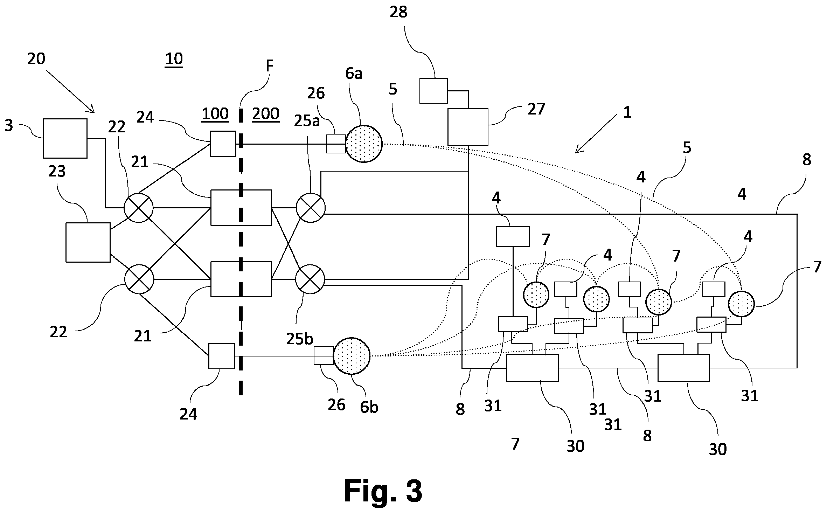

Fig. 3 shows a schematic illustration of an implementation 20 of the wireless network infrastructure 1 in a cabin system of an aircraft 10 according to an embodiment of the invention.

The embodiment shown in Fig. 3 is an implementation 20 of the present invention for operating emergency lightning or oxygen mask release by the wireless network infrastructure 1 in redundancy to a wired communication network 8.

In this implementation, the control system 3 is located in a secured domain 100, such as an aircraft control domain ACD, of the aircraft 10, while two first communication units 6a, 6b and the second communication units 7 are located in an unsecured domain 200, such as a non-ACD. The border between these domains 100, 200 is indicated by the bold dashed line F. For cross-communication between these two domains 100, 200, two security gateways 21 are arranged on the frontier F between the two domains 100, 200.

The control system 3, which may be located in the cockpit or a board computer (both not shown in Fig. 3), is connected to a switch 22, such as an Avionics Full Duplex Switch. The switch 22 is connected to a data concentrator 23, such as a remote data concentrator, the security gateways 21, and a micro switch 24, which is configured as a switch and combined with a data concentrator. The micro switch 24 may be a µ Avionics Full Duplex switch and the combined data concentrator may be a remote data concentrator.

The data concentrator 23 is connected to a switch 22, which is connected as well to the security gateways 21 and another combined micro switch 24. The two micro switches 24 are connected to a first communication units 6 as an access point for the wireless communication network 5. Between the micro switches 24 and the first communication units 6a, 6b, an additional security barrier 26 is located to take account of the security barrier between the two domains 100, 200. In the unsecured domain 200, the security gateways are connected to two network switches 25a, 25b, such as time sensitive network, TSN, switches, which are connected both to a processing module 27, such as a central processing module. The processing module 27 is connected to a controller 28 of the wireless network infrastructure 1.

In the present implementation, a wired communication network 8 is implemented to connect aircraft devices 4, such as emergency lighting and Oxygen masks, to the control system 3. For that, the network switches 25a, 25b are connected to distributor 30 such as an electronic distribution box, which can be located in the aircraft cabin. These distributors 30 are connected to two different interfaces 31, such as universal cabin interfaces UCI, which are connected to corresponding aircraft devices 4. These aircraft devices 4 represent any kind of end device in the aircraft 10. In particular, for the case of emergency lightning, an aircraft device 4 may be a master emergency power supply, which can power the emergency lightning inside the aircraft cabin. The connections described so far with the implementation 20 shown in Fig. 3 are wired connections based and are implemented as Ethernet connections of a corresponding wired network.

The second communication units 7, which are capable to receive control signals wirelessly from the first communication units 6, are connected to the interfaces 31 as well. In this embodiment of the wireless network infrastructure 1, the second communication units 7 are configured to communicate directly to a further second communication unit 7 over the wireless communication network 5. This means that these communication units 7 are able to relay control or any kind of data signal from e.g. the first communication unit 6 to another communication unit 7, as indicated by the dotted lines in Fig. 3. In this way, a form of meshed network topology is realized for increased reliability. In further embodiments, a star topology of the wireless communication network 5 is realized, which may provide deterministic links.

In this way, by the wireless communication network 5, which is indicated by the dotted lines, a redundant network can be established beside the wired communication network 8 for operating aircraft devices 4.

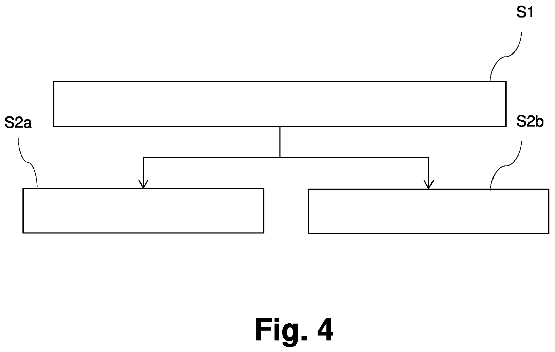

Fig. 4 shows a flow chart for a method for wireless communication in an aircraft 10 according to an embodiment of the invention.

The method comprises the step of establishing S1 a wireless communication network 5 by connecting a first communication unit 6, 6a, 6b of a control system 3 located in a secured domain 100 of the aircraft 10 as a first node to a plurality of second communication units 7, 7a-7c of respective aircraft devices 4, 4c-4c as second nodes. The aircraft devices 4, 4a-4c are located in an unsecured domain 200 of the aircraft 10. After establishing the wireless communication network 5, a control signal is generated S2a by the control system 3 and sent from the control system 3 to one or more of the aircraft devices 4, 4a-4c through the wireless communication network 5 to operate the aircraft devices 4, 4a-4c. Alternatively or in addition, a control signal is generated by one of the aircraft devices 4, 4a-4c and sent S2b from the aircraft devices 4, 4a-4c to at least one of the control system 3 through the wireless communication network 5. Each of the aircraft devices 4, 4a-4c further comprises additional control means 8, 8a-8c dissimilar from the control signals sent over the wireless communication network 5 for operating the aircraft devices 4, 4a-4c independently.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### LIST OF REFERENCE SIGNS

- 1: wireless network infrastructure
- 3: control system
- 4: aircraft device
- 5: wireless communication network
- 6, 6a, 6b: first communication unit
- 7, 7a-7c: second communication unit
- 8, 8a-d: additional control means
- 9, 9a-c: third communication unit
- 10: aircraft
- 20: Implementation
- 21: security gateway
- 22: switch
- 23: data concentrator
- 24: micro switch
- 25: network switch
- 26: additional barrier
- 27: processing module
- 28: controller
- 30: distributor
- 31: interface
- 100: secured domain
- 110: cockpit
- 200: unsecured domain
- 210: cabin
- F: border between secured and unsecured domain

## Claims

1. Wireless network infrastructure (1) for an aircraft (10), comprising
a first communication unit (6) configured to receive and transmit data signals from and to a control system (3) located in a secured domain (100) of the aircraft (10), the first communication unit (6) further being configured as a first network node of a wireless communication network (5),
a plurality of second communication units (7, 7a-7c) of corresponding aircraft devices (4, 4a-4c) located in an unsecured domain (200) of the aircraft (10), the second communication units (7, 7a-7c) being configured as second network nodes of the wireless communication network (5),
wherein the aircraft devices (4, 4a-4c) are configured to be operated by control signals sent from the control system (3) to the aircraft devices (4, 4a-4c) and transmit control signals to the control system (3) over the wireless communication network (5),
wherein each aircraft device (4, 4a-4c) having a communication unit (7, 7a-7c) further comprises additional control means (8, 8a-8d) dissimilar from the control signals sent over the wireless communication network (5) for operating the aircraft device (4, 4a-4c) independently.

2. Wireless network infrastructure (1) according to claim 1, wherein the aircraft devices (4, 4a-4c) are partly, in particular all, safety-related devices of an aircraft cabin of the aircraft (10) or the avionics system of the aircraft (10).

3. Wireless network infrastructure (1) according to claim 1 or 2, further comprising an autonomous energy supply for powering the first and second communication units (7, 7a-c) autonomously, wherein the autonomous energy supply, in particular, is implemented by one or more batteries in each of the first and second communication units (7, 7a-c).

4. Wireless network infrastructure (1) according to any of the precedent claims, wherein the additional control means (8, 8a-8d) is configured as a wired communication network (8. 8a-8c) connecting at least a part of the plurality of aircraft devices (4a-4c) to the control system (3).

5. Wireless network infrastructure (1) according to claim 4, wherein the wireless communication network (5) and the wired communication network (8, 8a-8c) connect safety-related aircraft devices (4a-4c) independently from each other.

6. Wireless network infrastructure (1) according to any of the precedent claims, wherein the additional control means (8a-8d) of one or more aircraft devices (4c) is a manual means (8d), in particular a switch, a lever or a graphical user interface, for operating the one or more aircraft devices (4c) manually by an operator.

7. Wireless network infrastructure (1) according to any of the precedent claims, wherein the wireless communication network (5) is operating in a safety-designated frequency band, in particular between 4200 and 4400 MHz.

8. Wireless network infrastructure (1) according to any of the precedent claims, further comprising a plurality of first communication units (6) of one or more control systems (3), wherein the plurality of first communication units (6) are configured as first nodes, and wherein each of the plurality of first communication units (6) is connected to one or more second communication units (7, 7a-7c) over the wireless communication network (5).

9. Wireless network infrastructure (1) according to any of the precedent claims, further comprising one or more third communication units (9) configured as intermediate nodes of the wireless communication network (5) and connecting the first communication unit (6) and at least one of the second communication units (7) over the wireless communication network (5).

10. Wireless network infrastructure (1) according to claims 8 or 9, wherein the first, second and third nodes of the wireless communication network (5) are configured as one of a meshed topology and a star topology.

11. Wireless network infrastructure (1) according to any of the precedent claims, wherein at least one of the plurality of second communication units (7) is configured to communicate directly to a further second communication unit (7) over the wireless communication network (5).

12. Aircraft (10) comprising
the wireless network infrastructure (1) according to the precedent claims,
the control system (3) located in the secured domain (100) of the aircraft (10), the aircraft devices (4, 4a-4c) located in the unsecured domain (200) of the aircraft (10), and the redundant control means (8, 8a-8c) for operating the aircraft devices (4).

13. Aircraft (10) according to claim 12, wherein the additional control means (8, 8a-8c) is a wired communication network (8a, 8b) connecting at least a part, in particular all, of the plurality of aircraft devices (7, 7a, 7b) to the control system (3).

14. Aircraft (10) according to claim 12, wherein the additional control means (8, 8a-c) of at least one aircraft device (7c) is a manual means (8c), in particular a switch, a lever or a graphical user interface, for operating the one or more aircraft devices (7c) manually by an operator.

15. Method for wireless communication onboard an aircraft (10), comprising
establishing (S1) a wireless communication network (5) by connecting a first communication unit (6) of a control system (3) located in a secured domain (100) of the aircraft (10) as a first node to a plurality of second communication units (7, 7a-7c) of respective aircraft devices (4, 4c-4c) as second nodes, the aircraft devices (4, 4a-4c) located in an unsecured domain (200) of the aircraft (10)
sending (S2a) a control signal generated by the control system (3) from the control system (3) to one or more of the aircraft devices (4, 4a-4c) through the wireless communication network (5) to operate the aircraft devices (4, 4a-4c), and/or
sending (S2b) a control signal generated by one of the aircraft devices (4, 4a-4c) to control system (3) through the wireless communication network (5),
wherein each of the aircraft devices (4, 4a-4c) further comprises additional control means (8, 8a-8d) dissimilar from the control signals sent over the wireless communication network (5) for operating the aircraft devices (4, 4a-4c) independently.
